(19) **Europäisches Patentamt / European Patent Office / Office européen des brevets**

(11) **EP 3 883 694 B1**

(12) **FASCICULE DE BREVET EUROPEEN**

(45) Date de publication et mention de la délivrance du brevet:
**05.06.2024   Bulletin 2024/23**

(21) Numéro de dépôt: **19808797.5**

(22) Date de dépôt: **22.11.2019**

(51) Classification Internationale des Brevets (IPC):
**B03C 3/47** *(2006.01)*   **B03C 3/155** *(2006.01)*
**B03C 3/12** *(2006.01)*   **B03C 3/49** *(2006.01)*
**B03C 3/41** *(2006.01)*   **B03C 3/06** *(2006.01)*
**B03C 3/08** *(2006.01)*   **B03C 3/36** *(2006.01)*

(52) Classification Coopérative des Brevets (CPC):
**B03C 3/47; B03C 3/06; B03C 3/08; B03C 3/12; B03C 3/155; B03C 3/368; B03C 3/41; B03C 3/49;** B03C 2201/04; B03C 2201/06; B03C 2201/10; Y02A 50/2351

(86) Numéro de dépôt international:
**PCT/EP2019/082287**

(87) Numéro de publication internationale:
**WO 2020/104678 (28.05.2020 Gazette 2020/22)**

(54) **PRÉCIPITATEUR/COLLECTEUR ÉLECTROSTATIQUE POUR PURIFICATEUR D'AIR OU ÉPURATEUR D'AÉROSOLS**

ELEKTROSTATISCHER ABSCHEIDER/KOLLEKTOR FÜR EINEN LUFTREINIGER ODER AEROSOLREINIGER

ELECTROSTATIC PRECIPITATOR/COLLECTOR FOR AN AIR PURIFIER OR AEROSOL PURIFIER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **23.11.2018   FR 1871789**

(43) Date de publication de la demande:
**29.09.2021   Bulletin 2021/39**

(73) Titulaire: **Commissariat à l'Energie Atomique et aux Energies Alternatives
75015 Paris (FR)**

(72) Inventeurs:
- **CLAVAGUERA, Simon**
  **38054 GRENOBLE cedex 09 (FR)**
- **DELLEA, Olivier**
  **38054 GRENOBLE cedex 09 (FR)**
- **GUIOT, Arnaud**
  **38054 GRENOBLE cedex 09 (FR)**
- **POURPRIX, Michel**
  **38054 GRENOBLE cedex 09 (FR)**

- **TARDIF, François**
  **38054 GRENOBLE cedex 09 (FR)**

(74) Mandataire: **Cabinet Nony
11 rue Saint-Georges
75009 Paris (FR)**

(56) Documents cités:
| | |
|---|---|
| EP-A1- 3 002 428 | WO-A1-91/05611 |
| JP-B2- 3 368 444 | US-A- 5 198 003 |
| US-A- 5 368 635 | US-A1- 2005 109 204 |
| US-A1- 2010 011 959 | US-A1- 2012 103 184 |

- **Shanna M Bruer ET AL: "Article Designation: Scholarly Three-Dimensionally Knit Spacer Fabrics: A Review of Production Techniques and Applications", , 1 janvier 2005 (2005-01-01), pages 1-31, XP055132023, Extrait de l'Internet: URL:https://textiles.ncsu.edu/tatm/wp-content/uploads/sites/4/2017/11/Bruer_full_149 _05_small.pdf [extrait le 2014-07-29]**

EP 3 883 694 B1

## Description

### Domaine technique

La présente invention concerne le domaine de la purification d'air et d'épuration d'aérosols, susceptible de contenir des particules en suspension.

La présente invention vise à améliorer les purificateurs d'air et épurateurs d'aérosols existants, notamment afin de diminuer leurs coûts de fabrication et de fonctionnement tout en garantissant une efficacité constante au cours du temps.

Bien que décrite en référence à une application de purification d'air, l'invention s'applique à toute épuration d'aérosols.

### Technique antérieure

La plupart des lieux de vie des individus sont des espaces clos, qu'il s'agisse de lieux accueillant du public (transports, administrations, écoles, hôpitaux, salles de sport et de cinéma, etc.), de bâtiments professionnels (bureaux et commerces) ou d'espaces privés (logements individuels ou collectifs).

Aux sources d'émission intérieure (fumée de tabac, résidus de combustion, amiante, radon, composés organiques volatiles, allergènes d'origine biologique ...) s'ajoute la pollution extérieure qui s'introduit dans les bâtiments via les ouvertures et les ventilations.

Cela est devenue une préoccupation majeure ainsi, l'Organisation Mondiale de la Santé (OMS) alerte: « la pollution de l'air, à l'intérieur des locaux comme à l'extérieur, est un problème majeur de santé environnementale touchant aussi bien les pays développés que ceux en développement".

Par exemple, la pollution de l'air due aux particules fines serait responsable de 48000 morts chaque année en France. Le poids sanitaire de cette pollution liée aux activités humaines (transport, industrie, chauffage avec des énergies fossiles ...) correspondrait à 9% de la mortalité en France continentale : [1].

Les particules fines et particulièrement la fraction PM2,5 sont celles pour lesquelles le coût socio-économique est le plus important parmi les polluants rencontrés en atmosphère intérieure: [2].

Ainsi, la commercialisation de purificateurs d'air promettant de filtrer la plupart de ces polluants de l'air intérieur a fait un bond. Leur principe général consiste à recycler l'air en aspirant, filtrant puis rejetant l'air ainsi épuré de ses polluants. Généralement, on trouve plusieurs filtres disposés les uns à la suite des autres dans le flux de l'air à filtrer. Un seul filtre regroupant différentes couches fonctionnelles peut également être mis en oeuvre.

Les systèmes basés sur de la filtration sur média filtrant fibreux présentent trois inconvénients majeurs que l'on peut résumer comme suit:

- une perte de charge importante induite par le média filtrant (coût énergétique de fonctionnement),
- son remplacement (consommable) pour garantir une efficacité constante au cours du temps,
- son coût de fabrication.

Ces trois inconvénients grèvent l'impact environnemental de telles solutions (déchets, consommation électrique ...) et obèrent ainsi leur rentabilité.

Pour pallier ces inconvénients, les purificateurs à ioniseur et précipitateur électrostatique, connu aussi sous les noms de filtre électrostatique et électrofiltre (ESP, acronyme anglais pour « *ElectroStatic Precipitator* ») apparaissent comme des solutions prometteuses.

La précipitation ou collection électrostatique est une méthode de choix qui permet la collecte de particules d'aérosols pour une large gamme granulométrique.

Le principe de fonctionnement de la collection électrostatique repose sur la mise en oeuvre préalable d'un champ électrique, en particulier d'un champ électrique intense pour créer un effet de décharge couronne (en anglais « *corona discharge* ») qui participera à la charge des particules préalablement à leur collecte.

Lorsqu'on génère un champ électrique intense dans un volume où des particules d'aérosol sont présentes, ces dernières peuvent se charger électriquement selon deux mécanismes de charge distincts et cela peut se produire concomitamment.

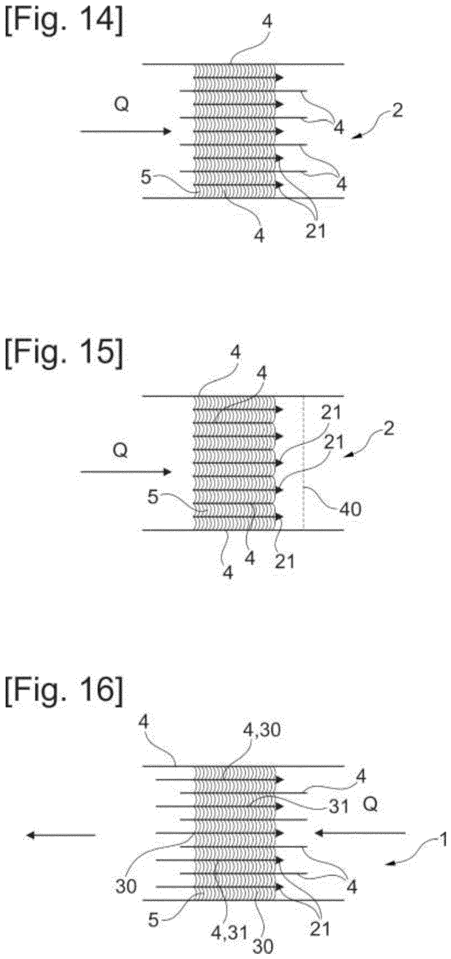

La publication [3], en particulier la figure 15.4 de la page 330 de cet ouvrage, montre que le mécanisme de charge électrique par diffusion d'ions unipolaires, associé au mécanisme de charge électrique par champ, est applicable à une large gamme de tailles de particules, à minima pour les particules de dimensions comprises entre 0,01 à 10 $\mu$m. Il ressort également que le mécanisme de charge électrique par diffusion d'ions unipolaires est surtout prépondérant pour les particules les plus fines, typiquement celles de dimensions inférieures à 300 nm. A contrario, le mécanisme de charge par champ est plus efficace pour les grosses particules, c'est-à-dire les particules de dimension micronique et submicronique (≥300 nm).

A titre d'exemple, si l'on considère la mobilité électrique d'une particule, notée Z, de l'ordre de 1 cm2/st.V.s en unité électrostatique CGS, soit $3,3\times10$-7 m2/V.s en unité SI, alors cette particule placée entre deux plaques planes et parallèles qui génèrent un champ électrique E de 105 V/m, acquiert une vitesse W égale au produit Z*E, soit W de l'ordre de 0,033 m/s. Il est clairement démontré que la force électrostatique engendre des vitesses largement supérieures aux autres champs de forces subies par une particule, que sont les champs de la gravité, inertiels, thermiques et radiatifs. Cet avantage est mis à profit dans le fonctionnement des épurateurs électrostatiques du commerce, où les processus de charge par diffusion et de charge par champ peuvent agir conjointement.

Charger électriquement des particules d'aérosol nécessite la présence d'ions unipolaires en forte concentration. La méthode de loin la plus efficace pour créer ces ions, dans l'air atmosphérique, est la décharge couronne.

Pour produire une décharge couronne, on doit établir un champ électrostatique dans une géométrie qui permet de le rendre non uniforme. Plus exactement, ce champ électrique élevé (plusieurs milliers à dizaines de milliers de volts par centimètre au voisinage de l'électrode de décharge) est induit par deux électrodes disposées à proximité l'une de l'autre: une première électrode polarisée ou électrode de décharge, généralement en forme de fil ou de pointe, étant disposée en regard d'une deuxième électrode, cette dernière se présentant sous la forme d'une contre-électrode, généralement de géométrie plane ou cylindrique. Le champ électrique existant entre les deux électrodes ionise le volume de gaz situé dans l'espace inter-électrodes, et notamment une gaine ou couronne de gaz ionisé située autour de l'électrode de décharge. Les charges créées, en migrant vers la contre-électrode, chargent les particules à séparer contenues dans le gaz. Les particules chargées ainsi créées migrent alors vers la contre-électrode, sur laquelle elles peuvent être collectées. Cette contre-électrode est usuellement appelée électrode de collecte. Du fait du niveau du champ électrique requis, il est nécessaire d'utiliser une électrode de décharge qui a un (très) faible rayon de courbure. Les électrodes de décharge rencontrées sont donc généralement soit des pointes fines soit des fils de faible diamètre. Ainsi, par un processus qui a pour origine les électrons et les ions créés par l'irradiation naturelle, les électrons sont accélérés dans le champ électrique intense créé au voisinage de l'électrode à (très) faible rayon de courbure. Par la haute tension imposée, si ce champ dépasse une valeur critique, un effet d'avalanche provoque l'ionisation de l'air dans cet espace. Ce phénomène est appelé décharge couronne.

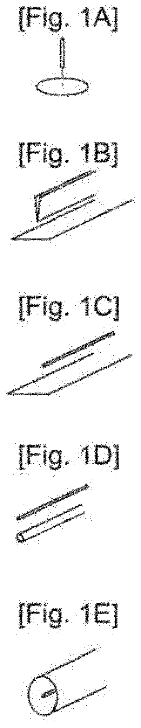

A titre d'exemple, on a représenté aux figures 1A à 1E quelques configurations d'électrodes les plus adaptées pour obtenir une décharge couronne, à savoir respectivement un agencement pointe-plan (figure 1A), lame-plan (figure 1B), fil-plan (figure 1C), fil-fil (figure 1D), fil-cylindre (figure 1E).

Par exemple en configuration pointe-plan, si la pointe est positive par rapport au plan, les électrons se déplacent rapidement vers la pointe alors que les ions positifs se déplacent vers le plan, créant alors un espace unipolaire positif. Par ailleurs, un vent d'ions, aussi appelé vent ionique, s'établit, caractérisé par un écoulement d'air dirigé de la pointe vers le plan, ayant pour origine les chocs des ions positifs avec les molécules neutres environnantes.

A l'inverse, si la pointe est négative par rapport au plan, les ions positifs se déplacent vers la pointe, et les électrons se déplacent vers le plan en se fixant aux molécules d'air pour former des ions négatifs. Dans tous les cas, même si le processus de création d'ions positifs ou négatifs n'est pas exactement symétrique, les ions unipolaires migrent de la pointe vers le plan avec une grande concentration de l'ordre de 106 à 109/cm3 et, quelle que soit la polarité, il apparaît un vent électrique dirigé de la pointe vers le plan.

Ainsi, l'introduction de particules d'aérosol dans l'espace pointe-plan permet de les charger de la même polarité que la pointe, selon un processus de charge par champ. En outre, le champ utilisé pour créer l'effet couronne et le vent électrique participent aussi au processus de charge par champ.

Pour les autres configurations montrées aux figures 1B à 1E, les processus de production d'ions et de charge par champ des particules sont en tous points similaires.

Les précipitateurs/collecteurs électrostatiques qui utilisent une configuration fil-cylindre sont connus depuis très longtemps, par l'auteur de la publication [4]. Ce type de précipitateurs/collecteurs concernent largement l'épuration d'effluents gazeux industriels mais peu le domaine des purificateurs d'air intérieur.

Ils semblent particulièrement intéressants, de par leur principe de fonctionnement très simple et leur grande efficacité.

Ce principe consiste à mettre sous haute tension, un fil tendu dans l'axe d'un cylindre relié à la masse. Par effet corona sur le fil, les ions créés chargent les particules qui sont précipitées sur la paroi interne du cylindre.

L'inconvénient majeur de ce type de précipitateurs/collecteurs est une forte création d'ozone. Mais, il a été prouvé qu'en modifiant la nature du fil ainsi que sur son diamètre, en utilisant par exemple une tresse de fils très fins, on pouvait supprimer à tout le moins réduire très fortement, cette création d'ozone.

Pour augmenter l'efficacité de collection, il a été proposé d'augmenter la surface de collection en multipliant le nombre de cylindres adjacents en parallèle les uns des autres, chaque cylindre étant dans une configuration fil-cylindre.

Cependant, ce type de géométrie fil-cylindre ne permet pas de découpler les fonctions de charge de l'aérosol et de collecte des particules et par conséquent même pour une géométrie très simple, les actions de montage, démontage et nettoyage peuvent être complexes et même endommager le matériel à terme, les fils de faible diamètre étant intrinsèquement fragiles.

Il est connu des dispositifs de filtration électrostatique à « double étage », c'est-à-dire comprenant une partie formant un ioniseur prolongé d'une partie de précipitation ou collection à proprement parler.

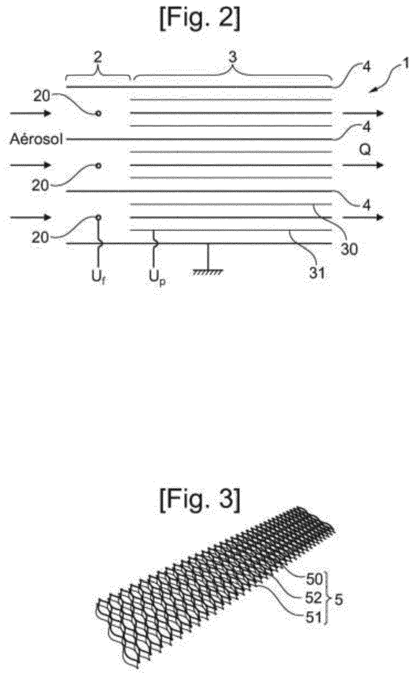

Un tel dispositif globalement désigné par la référence 1 est montré en figure 2: il comprend un ioniseur 2 en amont d'un précipitateur électrostatique 3. Les particules de l'aérosol sont tout d'abord électriquement chargées par effet corona en passant au voisinage de fils 20 portés à haute tension Uf, qui sont tendus entre des plaques 4 reliées à la masse, puis elles sont collectées sur des plaques 30 entre lesquelles un champ électrique est établi sous l'action d'une haute tension de polarisation Up. Cette géométrie est pratiquement toujours présentée dans des écoulements de section rectangulaire, les opérations de charge puis de collection s'effectuant entre des plaques 4, 30 planes et parallèles.

De nombreux purificateurs d'air déjà commercialisés fonctionnent sur ce principe. On peut citer par exemple celui commercialisé sous la dénomination « Sharper Image S1724 ».

Bien qu'un épurateur à plaques soit plus robuste qu'un dispositif à géométrie « fil-cylindre » comme mentionné précédemment, la fabrication des ensembles de plaques, est délicate et coûteuse. En effet, l'enchevêtrement avec alternance de pièces isolantes et électriquement conductrices et maintien mécanique est complexe pour garantir le positionnement à égale distance les unes des autres, des plaques polarisées tout en assurant leurs connexions électriques sous haute tension ou à la masse sans claquage disruptif.

Le brevet US5198003 propose une fabrication plus aisée d'un épurateur électrostatique à double étage, selon laquelle la réalisation des surfaces de collection se fait en enroulant des feuillards conducteurs électriques sous forme d'une double spirale, y compris le fil d'ionisation. Une des spirales est portée à la masse, l'autre est sous tension.

Cependant, l'épurateur dans sa globalité tel que proposé reste assez complexe mécaniquement du fait des tiges intercalaires et entretoises mises en oeuvre, telles que référencées bloc 18 et intercalaires 14, 16, 17 sur les figures illustrées.

La demande US 2012/103184 A1 décrit un système de filtration électrostatique pour extraire des particules d'un flux gazeux qui comprend en amont un ioniseur à électrodes de charges et en aval un précipitateur, et un système d'aspiration du flux entre les électrodes.

Le document JP3368444B2 décrit un système de filtration électrostatique comprenant des plaques électriquement conductrices et un espaceur électriquement isolant non-tricoté entre les plaques.

Le document WO9105611A1 décrit un système de filtration électrostatique comprenant des cylindres électriquement conductrices et un espaceur électriquement isolant non-tricoté entre les plaques.

Le document EP3002428A1 décrit un système de filtration électrostatique comprenant des plaques électriquement conductrices et un espaceur électriquement isolant en fibres entre les plaques.

Une autre approche d'un épurateur à double étage est proposée dans l'épurateur commercialisé sous la dénomination « Homedics AR-NCO2 », qui a fait l'objet de la demande de brevet US 2013/0061754 A1.

Dans cet épurateur, un ioniseur produit des ions unipolaires qui se déplacent en direction d'un anneau. Les particules se chargent au passage du flux d'ions produit et sont captées dans un filtre électrostatique qui est sous la forme d'une galette d'une trentaine de centimètres de diamètre et de 2,5 cm d'épaisseur. Telle qu'illustrée en figures 9 à 11 de la demande de brevet US 2013/0061754 A1, cette galette compacte est réalisée simplement à partir de deux rubans en papier ou matériaux non conducteurs enroulés l'un dans l'autre en double spirale et munis de peignes espaceurs. Chacune des spirales est revêtue d'une encre ou peinture électriquement conductrice au niveau d'un chant, le chant ainsi revêtu d'une des spirales étant à l'opposé de celui de l'autre spirale. Une différence de potentiel est établie entre les deux chants opposés dans le but de créer un champ électrique dans l'espace interrubans. Les particules étant chargées en amont, elles viennent se déposer sur les rubans sous l'action des forces électrostatiques en présence. L'efficacité donnée par le fabricant est de 99% pour les allergènes et micro-contaminants pour un débit nominal de 210 m3/h. Il est indiqué que les deux faces de l'électrofiltre peuvent être nettoyées grossièrement en utilisant un aspirateur ménager, mais que l'électrofiltre doit être changé périodiquement avec une recommandation tous les 18 mois.

Cet épurateur à double étage avec des électrodes enroulées en spirale semble être d'un coût de fabrication réduit tout en ayant une bonne efficacité vis-à-vis des particules d'aérosol.

De manière générale, il s'avère que l'utilisation d'espaceurs entre des feuilles électriquement conductrices agencées parallèles les unes aux autres facilite la conception et l'entretien des purificateur d'air mettant en oeuvre une précipitation électrostatique.

La littérature décrit ainsi plusieurs solutions d'espaceurs parmi lesquelles on peut citer :

- des billes ou cylindres ayant pour fonction de maintenir un espace constant entre des spires, comme décrit dans les demandes de brevet CN102720564 et CN 104907175,
- des tiges ou entretoises ayant pour fonction de maintenir un espace constant entre des spires, tel que décrit dans la demande EP 0129401,
- un média filtrant replié entre deux plaques, comme divulgué par la demande EP 0734772.

Ainsi, il existe à ce jour deux types de géométrie pour la mise en oeuvre d'une précipitation électrostatique pour la purification d'air. Comme cela ressort de ce qui précède, les précipitateurs électrostatiques avec des électrodes spirales semblent devoir s'imposer pour réduire les coûts de fabrication de purificateurs d'air tout en ayant une bonne efficacité vis-à-vis des particules d'aérosol.

Il existe un besoin pour améliorer encore les précipitateurs électrostatiques notamment afin d'en proposer à bas coût qui permettent en outre de satisfaire aux contraintes d'encombrement et de montage d'une part, et de nettoyage aisé par exemple par lavage d'autre part.

Le but général de l'invention est alors de répondre au moins en partie à ce besoin.

## Exposé de l'invention

Pour ce faire, l'invention a tout d'abord pour objet un précipitateur/collecteur électrostatique pour purificateur d'air ou épurateur d'aérosols, comprenant:

- au moins deux bandes électriquement conductrices formant des électrodes de collecte entre lesquelles un flux d'aérosol Q est destiné à s'écouler tangentiellement;
- un espaceur électriquement isolant, agencé entre les au moins deux électrodes de collecte, l'espaceur comprenant un tissu d'espacement tridimensionnel tricoté en chaîne qui maintient une épaisseur constante entre elles.

Selon un mode de réalisation avantageux, les deux bandes sont enroulées en spirales imbriquées l'une dans l'autre.

Ainsi, l'invention consiste à utiliser, en tant qu'espaceur d'électrodes pleines dans un précipitateur/collecteur électrostatique, un media fibreux non conducteur ultra-poreux sous la forme d'un tissu d'espacement tridimensionnel tricoté en chaîne, aussi appelé en langage anglo-saxon « warp-knitted spacer fabric » ou plus largement « spacer fabric ».

Un tel espaceur à tissu tridimensionnel présente une grande efficacité de filtration et ce avec une moindre consommation électrique et en introduisant peu de pertes de charge.

En outre, l'agencement des électrodes de collecte en spirale est une solution à bas coût devant permettre de satisfaire aux contraintes d'encombrement et de montage simplifié d'une part, rendant possible un nettoyage aisé par exemple par lavage d'autre part.

Autrement dit, l'invention permet de pallier les trois inconvénients majeurs des précipitateurs/collecteurs selon l'état de l'art dont le fonctionnement consiste à réaliser une filtration sur média filtrant fibreux, à savoir la perte de charge induite par le média filtrant, son remplacement (consommable) pour garantir une efficacité constante au cours du temps ainsi que le coût de fabrication. Ces trois inconvénients grèvent l'impact environnemental de telles solutions (déchets, consommation électrique ...) et obèrent ainsi leur rentabilité.

L'agencement des électrodes de collecte en spirale conformément à l'invention s'avère une solution à bas coût devant permettre de satisfaire aux contraintes d'encombrement et de montage simplifié d'une part, rendant possible un nettoyage aisé par exemple par lavage d'autre part.

Du fait de la faible perte de charge induite par l'espaceur selon l'invention et d'une consommation électrique réduite, le précipitateur/collecteur selon l'invention présente une grande efficacité énergétique ainsi qu'un impact environnemental plus faible que les précipitateurs/collecteurs existants.

De préférence, le tricot tridimensionnel a une épaisseur comprise entre 2 et 30 mm.

Selon une variante avantageuse, le tricot tridimensionnel est constitué, à l'état non déformé, de deux couches formant des faces d'extrémité dans un plan X-Y séparées par une couche de liaison dans la direction Z orthogonale au plan X-Y.

Selon un mode de réalisation avantageux, les deux bandes sont enroulées en spirales imbriquées l'une dans l'autre.

Avantageusement, chacune des deux bandes est un feuillard métallique, de préférence en laiton.

L'invention a également pour objet un purificateur d'air ou épurateur d'aérosols comprenant :

- un précipitateur/collecteur électrostatique tel que décrit précédemment,
- un ioniseur agencé en amont du collecteur électrostatique, comprenant en tant qu'éléments d'ionisation des particules, des fibres électriquement conductrices.

De préférence, les fibres sont des fibres de carbone.

Selon un mode de réalisation avantageux, l'ioniseur comprend, en amont ou en aval des fibres, un espaceur comprenant un tissu tridimensionnel tricoté en chaîne.

Selon une première configuration avantageuse, les fibres sont séparées par un feuillard métallique formant une électrode de masse.

Selon une deuxième configuration avantageuse, les fibres sont en regard d'une grille formant une électrode de masse.

Avantageusement, les fibres sont fixées en extrémité d'un feuillard métallique formant également une électrode de collecte du précipitateur/collecteur électrostatique.

D'autres avantages et caractéristiques ressortiront mieux à la lecture de la description détaillée, faite à titre illustratif et non limitatif, en référence aux figures suivantes.

**Brève description des dessins**

[Fig 1A] est une vue schématique d'une première configuration d'électrode pour obtenir un effet couronne par décharge électrique;

[Fig 1B] est une vue schématique d'une deuxième configuration d'électrode pour obtenir un effet couronne par décharge électrique;

[Fig 1C] est une vue schématique d'une troisième configuration d'électrode pour obtenir un effet couronne par décharge électrique;

[Fig 1D] est une vue schématique d'une quatrième configuration d'électrode pour obtenir un effet couronne par décharge électrique;

[Fig 1E] est une vue schématique d'une cinquième configuration d'électrode pour obtenir un effet couronne par décharge électrique;

[Fig 2] est une vue schématique en coupe longitudinale d'un précipitateur électrostatique à double étage, i.e. avec un étage formant un ioniseur et un étage formant un collecteur des particules, dans la continuité de l'ioniseur ;

[Fig 3] est une reproduction photographique d'un exemple d'espaceur conforme à l'invention ;

[Fig 4] est une reproduction photographique, à l'état désassemblé, d'un prototype de précipitateur électrostatique à double étage, à des fins d'expérimentation de l'espaceur conforme à l'invention

[Fig 5] est une reproduction photographique en vue de côté du collecteur selon la figure 4 avec la présence de l'espaceur conforme à l'invention ;

[Fig 6] illustre schématiquement le montage expérimental réalisé à partir du précipitateur électrostatique des figures 4 et 5 ;

[Fig 7] illustre sous forme de courbes l'efficacité de filtration de l'air obtenue avec un précipitateur électrostatique des figures 4 et 5, respectivement avec et sans espaceur selon l'invention ;

[Fig 8A] est une reproduction photographique d'un collecteur à électrodes de collecte agencées en double spirale séparées par un espaceur conforme à l'invention ;

[Fig 8B] est une autre reproduction photographique d'un collecteur à électrodes de collecte agencées en double spirale séparées par un espaceur conforme à l'invention ;

[Fig 9] est une reproduction photographique d'un exemple d'ioniseur à écoulement radial, adapté pour fonctionner en amont d'un collecteur selon les figures 8A et 8B;

[Fig 10] est une reproduction photographique d'un exemple d'ioniseur à écoulement longitudinal, adapté pour fonctionner en amont d'un collecteur selon les figures 8A et 8B;

[Fig 11] illustre schématiquement le montage expérimental réalisé à partir du précipitateur électrostatique des figures 8A et 8B avec un collecteur selon la figure 9 ou 10;

[Fig 12] est une reproduction photographique lors de l'enroulement d'un ioniseur utilisant un espaceur selon l'invention et des fibres de carbone;

[Fig 13] est une reproduction photographique de l'enroulement, une fois celui-ci réalisé, d'un ioniseur utilisant un espaceur selon l'invention et des fibres de carbone;

[Fig 14] est une représentation schématique en coupe longitudinale d'un ioniseur utilisant des fibres de carbone entre deux électrodes au potentiel zéro ;

[Fig 15] est une représentation schématique en coupe longitudinale d'un ioniseur utilisant des fibres de carbone devant une grille au potentiel zéro ;

[Fig 16] est une représentation schématique en coupe longitudinale d'un précipitateur électrostatique à double étage avec un ioniseur et un collecteur dans la continuité utilisant un espaceur selon l'invention, l'ioniseur utilisant en outre des fibres de carbone;

[Fig 17] est une reproduction photographique, d'un précipitateur électrostatique à double étage à électrodes en spirale, comme selon le schéma de la figure 16 ;

[Fig 18] est une autre reproduction photographique, d'un précipitateur électrostatique à double étage à électrodes en spirale, comme selon le schéma de la figure 16.

**Description détaillée**

Dans l'ensemble de la présente demande, les termes « entrée », « sortie », « amont » et « aval » sont à comprendre par référence par rapport au sens du flux d'aspiration au travers d'un précipitateur électrostatique selon l'invention. Ainsi, l'orifice d'entrée désigne l'orifice du dispositif par lequel l'air à purifier est aspiré tandis que celui de sortie désigne celui par lequel le flux d'air sort.

Les figures 1A à 1E ont déjà été commentées en préambule. Elles ne sont pas détaillées ci-après.

On a représenté en figure 2 un exemple de purificateur d'air 1 à géométrie à double étage, i.e. un ioniseur 2 et un précipitateur électrostatique 3 dans la continuité de l'ioniseur 2.

Le purificateur 1 comprend des plaques 4 mises à la masse, qui sont communes à l'ioniseur 2 et au précipitateur 3.

L'ioniseur 2 comprend des fils 20 tendus entre les plaques 4 à la masse.

Le précipitateur 3 comprend des plaques électriquement conductrices 30, 31, pleines et parallèles entre elles et aux plaques 4 de masse entre lesquelles elles sont agencées.

Le fonctionnement d'un tel purificateur 1 est le suivant : les particules présentes dans le flux d'air Q à purifier sont tout d'abord électriquement chargées par effet corona en passant au voisinage des fils 20 portés à haute tension Uf, puis elles sont collectées sur les plaques 30 entre lesquelles un champ électrique est établi sous l'action d'une haute tension de polarisation Up. Cette géométrie est pratiquement toujours celle dans des écoulements de section rectangulaire, les opérations de charge puis de collection s'effectuant entre les plaques 30 planes et parallèles.

Les inventeurs ont testé plusieurs espaceurs adaptés pour maintenir un écartement constant entre les électrodes, tout en laissant passer l'air avec une résistance aéraulique la plus faible possible, et tout en maintenant l'isolation électrique.

De ces tests, il est ressort qu'un espaceur comme celui référencé 5 en figure 3 est particulièrement avantageux.

Cet espaceur 5 est un tissu tridimensionnel tricoté en chaîne, de préférence sous la forme d'un tricot dit à double paroi. On pourra se reporter avantageusement aux publications [7], [8], [9].

Plus précisément, un tricot tridimensionnel à double paroi est constitué, à l'état non déformé, de deux couches 50, 51 formant des faces d'extrémité dans un plan X-Y séparées par une couche de liaison 52 dans la direction Z : voir aussi [10].

Le choix et la densité des fils constituant la couche de liaison liant les deux faces d'extrémité ainsi que leur architecture peuvent être parfaitement adaptés aux propriétés recherchées d'un espaceur (collecte, perte de charges, isolation électrique...) du précipitateur électrostatique.

La force de compression appliquée au tricot est supportée par le fil de la couche de liaison. La compressibilité du tricot est donc liée à ce fil, leurs dimensions géométriques et la densité surfacique.

Autrement dit, la résistance à l'écrasement d'un tricot tridimensionnel à double-paroi, est parfaitement adaptée pour maintenir une épaisseur constante entre deux électrodes de collecte.

En outre, la porosité qui peut être très grande, permet de garantir une faible perte de charge.

Enfin, les caractéristiques diélectriques conviennent puisque les fils constituant à la fois les faces d'extrémité et ceux de liaison peuvent être en matériau intégralement isolant électrique.

Dans le cadre de l'invention, un tricot tridimensionnel à double paroi 5 peut être tricoté en forme de parallélépipède rectangle sans raccord à implanter entre deux électrodes de collecte 30, 31 soit directement sous cette forme lorsque les électrodes 30, 31 sont planes et parallèles entre elles, soit selon un enroulement en spirale entre les deux électrodes 30, 31 elles-mêmes enroulées en spirale imbriquées l'une dans l'autre.

Les propriétés et paramètres d'un tricot à double-paroi peuvent être très variables et adaptées à souhait : on pourra se reporter notamment à la publication [11].

Ainsi, les propriétés et paramètres suivants peuvent être envisagés pour un tricot tridimensionnel à double-paroi :

- une épaisseur totale comprise entre 2 et 30 mm ;
- les fils des faces d'extrémité tissées et les fils de liaison, réalisés en un ou plusieurs matériaux choisis parmi le polyester, notamment le Coolmax®, le polybutylène téréphtalate (PBT), le polyéthylène téréphtalate (PET), le nylon, l'élasthanne, le Nomex®, le Kevklar®, le polyamide, le verre, le cas échéant avec une gaine notamment en silicone ;
- les fils mono-filament ou multi-filaments ;
- un diamètre de fil de liaison compris entre 10 et 1000 $\mu$m ;
- un agencement de fil de liaison avec un angle dans le plan Z-X compris entre 20 et 90°.

Les inventeurs ont réalisé des essais avec un tricot tridimensionnel à double-paroi 5 avec les caractéristiques suivantes :

- épaisseur *largeur*longueur : 1 cm $\times$ 4 cm $\times$ 20 cm ;
- matériau des faces d'extrémité 50, 51 : polyester ;
- densité : 50 à 300kg/m$^3$ ;
- matériau de la couche de liaison 52 : polyester, microfibre;
- diamètre du fil de liaison : 10 à 20 $\mu$m.

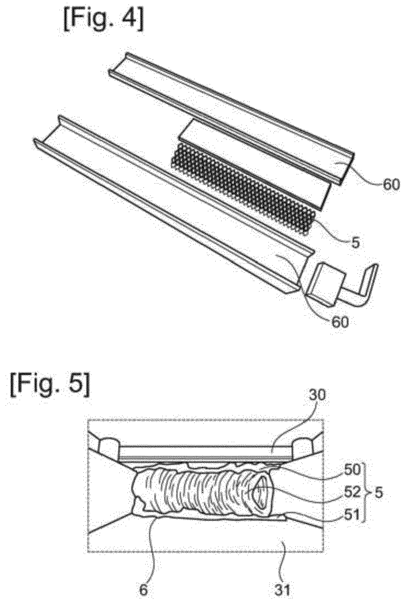

Tel que montré en figures 4, 5 et 6 le module de purificateur 1 réalisé aux fins d'essais comprend un canal 6 constitué de profilés 60 en PVC, dont la section intérieure est rectangulaire de dimensions 1*4 cm, avec à l'intérieur un étage d'ionisation 2 et un précipitateur 3.

Dans un tel module, l'ioniseur 2 comprend deux chargeurs en fibres de carbone disposés face à face. Ce type de chargeur, d'une très grande simplicité, est décrit par exemple dans la publication [12]. Il permet de charger efficacement des nanoparticules par diffusion d'ions unipolaires tout en produisant très peu d'ozone.

La collection des particules s'effectue entre deux plaques 30 et 31 planes et parallèles où un champ électrique est établi.

Le tricot 3D peut être inséré ou retiré aisément de l'espace entre les plaques de collecte 30 et 31 afin d'en étudier les effets.

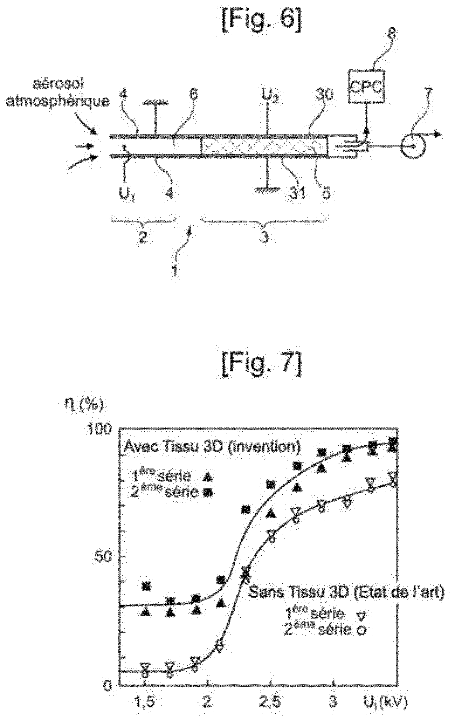

La figure 6 illustre schématiquement l'ensemble de l'installation pour les essais avec le précipitateur 3 à géométrie d'électrodes 30, 31 planes et parallèles.

L'aérosol d'essai est celui porté par l'air atmosphérique ambiant. L'air est aspiré par une pompe 7 à débit volumique constant.

Une haute tension U1 alimente les chargeurs d'ioniseur 2 à fibres de carbone.

Une haute tension U2 polarise une des électrodes 30 ou 31 du collecteur (précipitateur) 3, l'autre étant électriquement reliée au potentiel zéro. La tension de polarisation U2 au niveau du collecteur est fixée à +3,5 kV, le débit d'aspiration de la pompe est de l'ordre de 20 l/min. La seule variable est la tension U1 alimentant les fibres de carbone au niveau de l'ioniseur 2.

Un compteur 8 de particules par condensation (CPC) mesure la concentration des particules d'aérosol en aval du canal 6.

Deux séries d'essais ont été réalisées respectivement avec et sans l'espaceur 5 conforme à l'invention.

Soit N0 la concentration des particules en amont du précipitateur électrostatique, N1 la concentration des particules en aval.

L'efficacité du précipitateur/collecteur 3 est notée $\eta$, telle que

[Math 1]

$$\eta = \frac{(N0 - N1)}{N0}$$

La figure 7 donne les résultats d'efficacité $\eta$ = f(U1).

On constate que pour une tension U1 > 2 kV, l'ioniseur 2 joue son rôle et l'efficacité augmente.

Il apparaît également que les résultats sont meilleurs en présence de l'espaceur 5 selon l'invention, y compris pour U1 < 2 kV, c'est-à-dire pour les particules neutres probablement piégées par le phénomène de diffusion. On notera ici que la tension Uc n'est pas nulle et donc la fraction de particules naturellement chargées est également collectée par précipitation électrostatique.

Ainsi, dans les conditions décrites, on constate que l'efficacité d'épuration est meilleure avec un espaceur 5 selon l'invention que sans.

Or, cela est loin d'avoir été évident : les phénomènes physiques en présence ne permettent pas spontanément à un homme de l'art d'anticiper de tels résultats (combinaisons d'effets de diffusion brownienne, d'effets dues à la polarisation du tissu 5 et de perturbations aérauliques).

Les inventeurs ont réalisé une autre géométrie de précipitateur 3, i.e. avec un espaceur 5 selon l'invention mais avec des électrodes de collecte 30, 31 agencées en spirale imbriquées l'une dans l'autre.

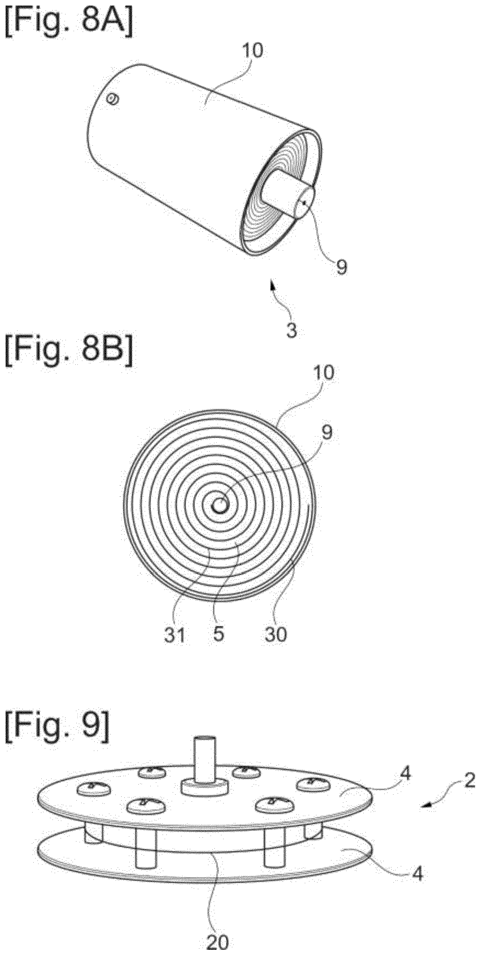

Un tel précipitateur/collecteur 3 à électrodes en spirale 30, 31 est montré aux figures 8A et 8B.

Le dimensionnement et constitution de ce précipitateur 3 sont les suivants.

Les électrodes de collecte 30, 31 sont enroulées en double spirale l'une dans l'autre autour d'un mandrin 9. Ces électrodes 30, 31 sont constituées chacune d'un feuillard en laiton, d'épaisseur 2/10 mm, de largeur 150 mm, et de longueur 1500 mm.

L'espaceur isolant 5 sous la forme d'un tricot 3D est placé en sandwich entre les feuillards 30. Le tricot 5 utilisé a une épaisseur de 3 mm, et est commercialisé sous la référence Müller Textil, réf. 6020.

L'ensemble des électrodes de collecte 30, 31 séparées par l'espaceur 5 et enroulé autour du mandrin 9 est placé à l'intérieur d'un cylindre électriquement isolant 10 formant une enveloppe isolante.

Un des feuillards 30 est porté à une haute tension positive Up = 3 kV, ce qui constitue une valeur limite, car des décharges disruptives apparaissent entre les électrodes à partir de 4 kV.

L'autre feuillard 31 est porté au potentiel zéro.

Différents types d'ioniseurs 2 réalisés par les inventeurs peuvent être utilisés en amont du précipitateur 3 à géométrie en spirale.

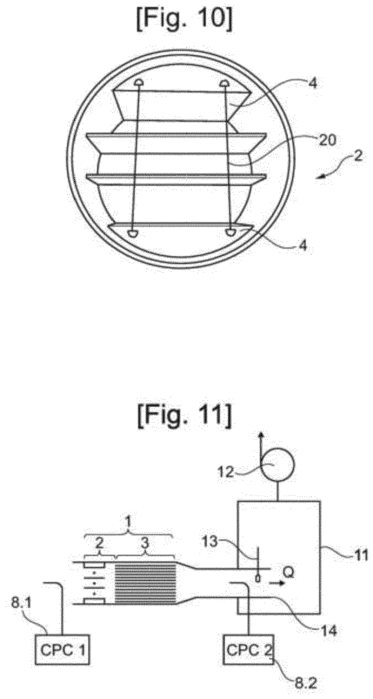

La figure 9 illustre un ioniseur 2 à géométrie cylindrique à écoulement radial tandis que la figure 10 illustre un ioniseur 2 à écoulement axial. Chacun de ces ioniseurs 2 intègre dans son espace d'écoulement des fils 20 d'ionisation tendus entre des plaques métalliques 4 espacées l'une de l'autre.

Ces fils 20 sont en tungstène de diamètre 40 à 80 $\mu$m, plus généralement compris entre 1 et 100 $\mu$m. Les plaques métalliques peuvent être en acier, laiton....

Les fils 20 sont portés à une haute tension positive Uf et les plaques 4 sont reliées au potentiel zéro.

La figure 11 illustre schématiquement l'ensemble de l'installation pour les essais avec le précipitateur 3 à géométrie d'électrodes 30, 31 en spirale à l'intérieur d'une boîte à gants.

L'extraction d'air de la boîte à gants 11 est réalisée par un extracteur 12 pour faire varier le débit Q au travers du purificateur 1. Ce débit est mesuré par l'intermédiaire d'une sonde de vitesse 13 placée dans un tube de sortie 14 de diamètre 100 mm.

L'aérosol atmosphérique de la pièce est l'aérosol d'essai.

Deux compteurs 8.1, 8.2 de particules par condensation (CPC) sont agencés l'un en amont du purificateur d'essai 1, l'autre en aval dans le tube de sortie 14.

L'efficacité d'épuration du dispositif ($\eta$) est calculée en faisant le rapport des concentrations en particules mesurées au moyen des deux CPC.

On a donc $\eta = 1 - N_2/N_1$, $N_1$ et $N_2$ représentant les concentrations en part.cm$^{-3}$ mesurées par les CPC 8.1 et 8.2.

Les résultats d'essais $\eta = f(Q)$ sont fournis dans le tableau 1 suivant.

[Tableau 1]

| V (m/s) | Q (m3/h) | Uf (kV) | Uc (kV) | CPC 1 (p/cm$^3$) | CPC 2 (p/cm$^3$) | $\eta$ **(%)** |
|---------|----------|---------|---------|------------------|------------------|-------|
| 2,5 | 70 | 0 | 0 | 1300 | 1000 | |
| 2,5 | 70 | 8 | 3 | 1300 | 55 | **95,8** |
| 2,2 | 62 | 0 | 0 | 1300 | 940 | |
| 2,2 | 62 | 8 | 3 | 1300 | 50 | **96,1** |
| 2 | 56 | 0 | 0 | 1300 | 980 | |
| 2 | 56 | 8 | 3 | 1300 | 50 | **96,1** |
| 1,8 | 51 | 0 | 0 | 1300 | 900 | |
| 1,8 | 51 | 8 | 3 | 1300 | 42 | **96,8** |
| 1,6 | 45 | 0 | 0 | 1300 | 850 | |
| 1,6 | 45 | 8 | 3 | 1300 | 40 | **96,9** |
| 1,4 | 40 | 0 | 0 | 1250 | 850 | |
| 1,4 | 40 | 8 | 3 | 1250 | 28 | **97,8** |
| 1,18 | 33 | 0 | 0 | 1250 | 890 | |
| 1,18 | 33 | 8 | 3 | 1250 | 22 | **98,2** |
| 0,8 | 23 | 0 | 0 | 1300 | 820 | |
| 0,8 | 23 | 8 | 3 | 1300 | 11 | **99,1** |
| 0,6 | 17 | 0 | 0 | 1370 | 970 | |
| 0,6 | 17 | 8 | 3 | 1370 | 5 | **99,6** |

Il ressort donc de ce tableau 1, qu'en première approche, les résultats d'efficacité d'épuration ($\eta$) sont favorables

Pour rappel,

[Math 2]

$$\eta = 1 - \exp(-Aw/Q).$$

Ici, la surface de collection A vaut $1,5 \times 0,15 \times 2 = 0,45$ m$^2$.

En prenant une vitesse w = 0,132 m/s et pour un débit Q = 70 m3/h (0,0194 m3/s), on trouve une efficacité théorique $\eta$ = 95,3 %, alors que comme cela ressort du tableau l'efficacité mesurée expérimentalement $\eta$ = 95,8 %. Il peut toutefois être remarqué que sans tension appliquée (Uf = Uc = 0), on observe une efficacité de l'ordre de 25 à 35%, probablement liée au dépôt de particules ultrafines par diffusion sur les parois internes et sur les fibres du tricot tridimensionnel formant l'espaceur 5.

Les inventeurs ont en outre pensé à coupler un précipitateur/collecteur 3 à espaceur 5 selon l'invention avec un ioniseur 2 amélioré par la présence de fibres de carbones 21 ou toutes autres fibres fines électriquement conductrices.

Cet ioniseur 2 est plus spécialement adapté aux filtres électrostatiques de géométrie cylindrique, mais il peut s'appliquer à toute autre géométrie, y compris la géométrie plane.

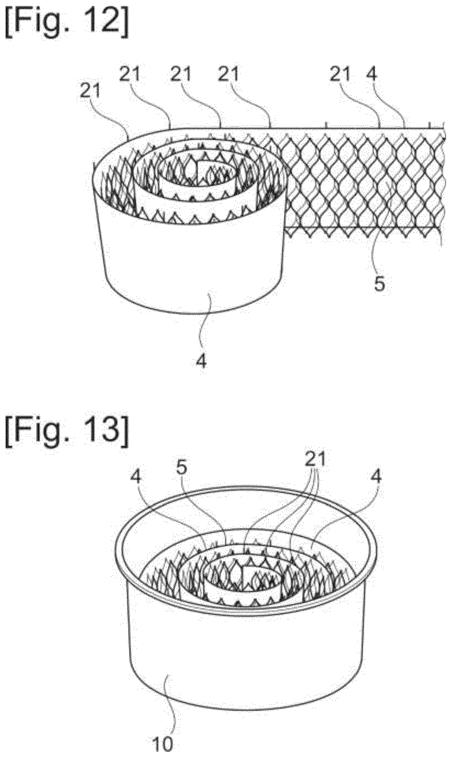

Un exemple de cet ioniseur 2 à fibres de carbone 21 à géométrie à enroulement en spirale est montré aux figures 12 et 13.

Des fibres de carbone 21 sont fixées en étant régulièrement espacées sur un ruban métallique 4.

Ce ruban 4 est enroulé avec un espaceur 5 sous la forme d'un tricot 3D comme selon l'invention puis l'ensemble est placé dans un tube 10 électriquement isolant.

Dans cette géométrie en spirale, plusieurs configurations sont possibles pour créer des ions unipolaires permettant de charger des particules d'aérosol.

La figure 14 illustre une configuration où chaque fibre de carbone 21 est agencée entre deux électrodes 4 portées à la masse, enroulées en spirale.

La figure 15 illustre une configuration où les fibres de carbone 21 sont agencées devant une grille 40 portée à la masse, agencée en travers de l'écoulement Q.

Il est précisé que dans ces figures 14 et 15, le sens de l'écoulement Q est de gauche à droite.

Quelques essais ont été réalisés jusqu'à une tension de fibres de carbone 21 portée à +7 kV, l'aérosol d'essai étant l'aérosol atmosphérique.

Les premiers résultats sont très prometteurs car ils montrent qu'un purificateur/épurateur 1 constitué d'un ioniseur 2 et d'un précipitateur/collecteur 3 munis chacun d'un espaceur 5 en tissu dimensionnel tricoté en chaîne est performant et ce avec de réelles perspectives de réalisation à très bas coût.

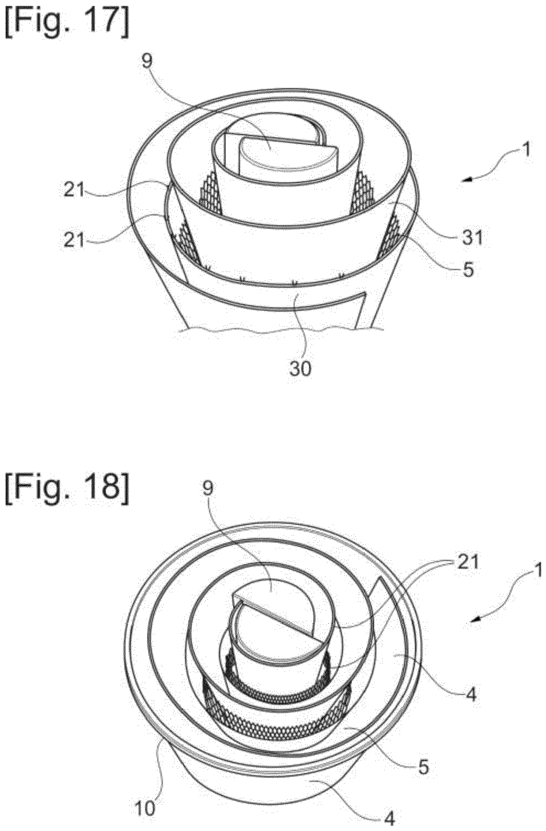

Un mode de réalisation avantageux illustré en figures 16 à 18, consiste à réaliser un purificateur 1 avec un tissu tridimensionnel 5 agencé en spirale entre des feuillards métalliques 4, 30, 31 munis à leurs extrémités de fibres fines de carbone 21 qui sert à la fois d'ioniseur 2 et de collecteur 3. Les fibres de carbones 21 sont avantageusement fixées sur une des deux tranches de chaque feuillard métallique 4, 30, 31, porté au haut potentiel U.

Ce mode de construction est particulièrement simple et compact.

Les essais préliminaires effectués avec un purificateur 1 selon ce mode de construction ont montré des efficacités d'épuration (aérosol atmosphérique, U = +7.5 kV) de l'ordre de 80% à un débit Q de 100 m$^3$/h et jusqu'à 95% à 40 m$^3$/h.

Un purificateur 1 avec espaceur filtrant 5 sous la forme d'un tissu 3D tricoté en chaîne peut être utilisé dans de nombreuses applications en atmosphères intérieures, c'est-à-dire des espaces clos au sens large, qu'il s'agisse de lieux accueillant du public (transports, administrations, écoles, hôpitaux, salles de sport et de cinéma, etc.), de bâtiments professionnels (bureaux et commerces) ou d'espaces privés (logements individuels ou collectifs).

D'autres applications peuvent être envisagées, comme notamment l'épuration d'aérosols dans des gaz de procédé, ou le traitement de l'air à plus petits débits (habitacles de véhicules) ou à plus grands débits (gaines de ventilation), par exemple.

D'autres variantes et améliorations peuvent être apportées sans pour autant sortir du cadre de 1 invention. L'invention est définie par les revendications annexées.

Si dans l'ensemble des modes de réalisation illustrés, les espaceurs 5 sont avantageusement des tricots 3D à double-paroi, tout tissu tridimensionnel tricoté peut convenir.

Dans le mode de réalisation avantageux illustré, l'ioniseur 3 comprend des fibres à carbone 21 mais toutes fibres électriquement conductrices de faibles dimensions (typiquement de 1 à 100 $\mu$m) peuvent convenir.

L'invention n'est pas limitée aux exemples qui viennent d'être décrits, mais est défini par les revendications annexées; on peut notamment combiner entre elles des caractéristiques des exemples illustrés au sein de variantes non illustrées.

**Liste des documents cités**

1: Etude 2016 Santé Publique France;

2: "Etude exploratoire du coût socio-économique des polluants de l'air intérieur", Avril 2014, rapport d'étude ANSES-CSTB;

3: Hinds W.C., Aerosol Technology, Wiley Edit., Second Edition (1999);

4: Withe H.J., Industrial Electrostatic Précipitation, Addison-Wesley Publishing Company, Inc. (1963);

5: Han B., Kim Y.J., Sioutas C., "Unipolar Charging of Fine and Ultra-Fine Particles Using Carbon Fiber Ionizers", Aerosol Sci. Technol, 42 : 793-800 (2008);

6: Kim H.J., Han B., Woo C.G., Kim Y.J., "Ozone Emission and Electrical Characteristics of Ionizers with Different Electrode Materials", Numbers, and Diameters, IEEE Trans. Ind. Appl., Vol. 53, n°1, 459-465 (2017);

7: I. Dorin et al., «Developments of 3D knitted fabrics », 17th international Conférence, Structure and Structural Mechanics of Textiles, 2010;

8: L.Ciobanu, « Developments of 3D Knitted Fabrics for Advanced Composite Materials », www.intechopen.com;

9: D.Matsouka, S.Vassiliadis, S. Mitilineos, N. Stathopoulos & E. Siores « Three-dimensonial weft-knitted textile fabrics-based capacitors », The journal of the Textile Institute, 16 May 2017 ;

10: G. Nemoz : « Textures textiles tridimensionnelles », techniques de l'ingénieur, AM5122, 2003 ;

11: J.Yip, S-P Ng « Study of three-dimensonial textile fabrics : Physcial and mechanical properties », Journal of materials processing technology, 206, pp359-364, 2008 ;

12: Han B., Kim H.J., Kim Y.J., Sioutas C., "Unipolar Charging of Fine and Ultra-Fine Particles Using Carbon Fiber Ionizers", Aerosol Sci. Technol., 42:793-800 (2008);

**Revendications**

1. Précipitateur/collecteur électrostatique (3) pour purificateur d'air (1) ou épurateur d'aérosols, comprenant :

   - au moins deux bandes électriquement conductrices (30, 31) formant des électrodes de collecte entre lesquelles un flux d'aérosol Q est destiné à s'écouler tangentiellement ;
   - un espaceur (5) électriquement isolant, agencé entre les au moins deux électrodes de collecte **caractérisé en ce que** l'espaceur comprend un tissu tridimensionnel tricoté en chaîne qui maintient une épaisseur constante entre elles.

2. Précipitateur/collecteur électrostatique selon la revendication 1, le tricot tridimensionnel ayant une épaisseur comprise entre 2 et 30 mm.

3. Précipitateur/collecteur électrostatique selon la revendication 1 ou 2, le tricot tridimensionnel étant constitué, à l'état non déformé, de deux couches (50, 51) formant des faces d'extrémité dans un plan X-Y séparées par une couche de liaison (52) dans la direction Z orthogonale au plan X-Y.

4. Précipitateur/collecteur électrostatique selon l'une des revendications précédentes, les deux bandes étant enroulées en spirales imbriquées l'une dans l'autre.

5. Précipitateur/collecteur électrostatique selon la revendication 4, chacune des deux bandes étant un feuillard métallique, de préférence en laiton.

6. Purificateur d'air (1) ou épurateur d'aérosols comprenant :

   - un précipitateur/collecteur électrostatique (3) selon l'une des revendications 1 à 5 ;
   - un ioniseur (2) agencé en amont du collecteur électrostatique (3), comprenant en tant qu'éléments d'ionisation des particules, des fibres électriquement conductrices (21).

7. Purificateur d'air (1) ou épurateur d'aérosols selon la revendication 6, les fibres étant des fibres de carbone.

8. Purificateur d'air (1) ou épurateur d'aérosols selon la revendication 6 ou 7, l'ioniseur comprenant, en amont ou en aval des fibres, un espaceur (5) comprenant un tissu tridimensionnel tricoté en chaîne.

9. Purificateur d'air (1) ou épurateur d'aérosols selon la revendication 8, les fibres étant séparées par un feuillard métallique formant une électrode de masse (4).

10. Purificateur d'air (1) ou épurateur d'aérosols selon la revendication 8, les fibres étant en regard d'une grille formant une électrode de masse (40).

11. Purificateur d'air (1) ou épurateur d'aérosols selon l'une des revendications 6 à 10, les fibres étant fixées en extrémité d'un feuillard métallique formant également une électrode de collecte du précipitateur/collecteur électrostatique (3).

**Patentansprüche**

1. Elektrostatischer Abscheider/Kollektor (3) für einen Luftreiniger (1) oder einen Aerosolreiniger, der Folgendes beinhaltet:

   - mindestens zwei elektrisch leitende Streifen (30, 31), die Kollektorelektroden bilden, zwischen denen ein Aerosolstrom Q tangentiell strömen soll;
   - einen elektrisch isolierenden Abstandshalter (5), der zwischen den mindestens zwei Kollektorelektroden eingerichtet ist, **dadurch gekennzeichnet, dass** der Abstandshalter ein kettengewirktes dreidimensionales Gewebe beinhaltet, das eine konstante Dicke zwischen ihnen aufrechterhält.

2. Elektrostatischer Abscheider/Kollektor nach Anspruch 1, wobei das dreidimensionale Gewirk eine Dicke zwischen 2 und 30 mm aufweist.

3. Elektrostatischer Abscheider/Kollektor nach Anspruch 1 oder 2, wobei das dreidimensionale Gewirk im nicht verformten Zustand aus zwei Lagen (50, 51) besteht, die Endfläche in einer X-Y-Ebene bilden und durch eine Verbindungslage (52) in der zu der X-Y-Ebene orthogonalen Richtung Z getrennt sind.

4. Elektrostatischer Abscheider/Kollektor nach einem der vorhergehenden Ansprüche, wobei die zwei Streifen spiralförmig umeinander gewickelt sind.

5. Elektrostatischer Abscheider/Kollektor nach Anspruch 4, wobei jeder der zwei Streifen ein Metallband, vorzugsweise aus Messing, ist.

6. Luftreiniger (1) oder Aerosolreiniger, der Folgendes beinhaltet:

   - einen elektrostatischen Abscheider/Kollektor (3) nach einem der Ansprüche 1 bis 5;
   - einen Ionisator (2), der stromaufwärts des elektrostatischen Kollektors (3) eingerichtet ist und der als Elemente zur Ionisierung der Partikel elektrisch leitende Fasern (21) beinhaltet.

7. Luftreiniger (1) oder Aerosolreiniger nach Anspruch 6, wobei die Fasern Kohlenstofffasern sind.

8. Luftreiniger (1) oder Aerosolreiniger nach Anspruch 6 oder 7, wobei der Ionisator stromaufwärts oder stromabwärts der Fasern einen Abstandshalter (5) beinhaltet, der ein kettengewirktes dreidimensionales Gewebe beinhaltet.

9. Luftreiniger (1) oder Aerosolreiniger nach Anspruch 8, wobei die Fasern durch ein Metallband getrennt sind, das eine Masseelektrode (4) bildet.

10. Luftreiniger (1) oder Aerosolreiniger nach Anspruch 8, wobei sich die Fasern gegenüber einem Gitter befinden, das eine Masseelektrode (40) bildet.

11. Luftreiniger (1) oder Aerosolreiniger nach einem der Ansprüche 6 bis 10, wobei die Fasern an einem Ende eines Metallbandes befestigt sind, das auch eine Kollektorelektrode des elektrostatischen Abscheiders/Kollektors (3) bildet.

**Claims**

1. Electrostatic precipitator/collector (3) for an air purifier (1) or aerosol purifier, comprising:

   - at least two electrically conductive strips (30, 31) forming collection electrodes between which an aerosol flow Q is intended to flow tangentially;
   - an electrically insulating spacer (5) arranged between the at least two collection electrodes, **characterized in that** the spacer comprises a three-dimensional warp-knitted fabric that maintains a constant thickness between the collection electrodes.

2. Electrostatic precipitator/collector according to Claim 1, the three-dimensional knitted fabric being between 2 and 30 mm thick.

3. Electrostatic precipitator/collector according to Claim 1 or 2, the three-dimensional knitted fabric being formed, in the non-deformed state, of two layers (50, 51) that form end faces in a plane X-Y and that are separated by a connecting layer (52) in the direction Z orthogonal to the plane X-Y.

4. Electrostatic precipitator/collector according to one of the preceding claims, the two strips being wound in spirals and nested in one another.

5. Electrostatic precipitator/collector according to Claim 4, each of the two strips being a metal strap, preferably made of brass.

6. Air purifier (1) or aerosol purifier, comprising:

   - an electrostatic precipitator/collector (3) according to one of Claims 1 to 5;
   - an ionizer (2) arranged upstream of the electrostatic collector (3), comprising electrically conductive fibres (21) as particle ionization elements.

7. Air purifier (1) or aerosol purifier, according to Claim 6, the fibres being carbon fibres.

8. Air purifier (1) or aerosol purifier according to Claim 6 or 7, the ionizer comprising, upstream or downstream of the fibres, a spacer (5) comprising a three-dimensional warp-knitted fabric.

9. Air purifier (1) or aerosol purifier according to Claim 8, the fibres being separated by a metal strap forming a ground electrode (4).

10. Air purifier (1) or aerosol purifier according to Claim 8, the fibres facing a grille forming a ground electrode (40).

11. Air purifier (1) or aerosol purifier according to one of Claims 6 to 10, the fibres being fastened to the end of a metal strap also forming a collection electrode of the electrostatic precipitator/collector (3).

[Fig. 1A]

[Fig. 1B]

[Fig. 1C]

[Fig. 1D]

[Fig. 1E]

[Fig. 2]

[Fig. 3]

[Fig. 4]

[Fig. 5]

## [Fig. 6]

## [Fig. 7]

[Fig. 8A]

[Fig. 8B]

[Fig. 9]

[Fig. 10]

[Fig. 11]

[Fig. 12]

[Fig. 13]

[Fig. 14]

[Fig. 15]

[Fig. 16]

[Fig. 17]

[Fig. 18]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5198003 A
- US 2012103184 A1
- JP 3368444 B
- WO 9105611 A1
- EP 3002428 A1
- US 20130061754 A1
- CN 102720564
- CN 104907175
- EP 0129401 A
- EP 0734772 A

**Littérature non-brevet citée dans la description**

- *Etude exploratoire du coût socio-économique des polluants de l'air intérieur,* Avril 2014
- **HINDS W.C.** Aerosol Technology. Wiley Edit, 1999
- **WITHE H.J.** Industrial Electrostatic Précipitation. Addison-Wesley Publishing Company, 1963
- **HAN B. ; KIM Y.J. ; SIOUTAS C.** Unipolar Charging of Fine and Ultra-Fine Particles Using Carbon Fiber Ionizers. *Aerosol Sci. Technol,* 2008, vol. 42, 793-800
- **KIM H.J. ; HAN B. ; WOO C.G. ; KIM Y.J.** Ozone Emission and Electrical Characteristics of Ionizers with Different Electrode Materials. *Numbers, and Diameters, IEEE Trans. Ind. Appl.,* 2017, vol. 53, 459-465
- **I. DORIN et al.** Developments of 3D knitted fabrics. *17th international Conférence, Structure and Structural Mechanics of Textiles,* 2010
- **L.CIOBANU.** *Developments of 3D Knitted Fabrics for Advanced Composite Materials, www.intecho-pen.com*
- **D.MATSOUKA ; S.VASSILIADIS ; S. MITILINEOS ; N. STATHOPOULOS ; E. SIORES.** Three-dimensonial weft-knitted textile fabrics-based capacitors. *The journal of the Textile Institute,* 16 Mai 2017
- **G. NEMOZ.** *Textures textiles tridimensionnelles,* 2003
- **J.YIP ; S-P NG.** Study of three-dimensonial textile fabrics : Physcial and mechanical properties. *Journal of materials processing technology,* 2008, vol. 206, 359-364
- **HAN B. ; KIM H.J. ; KIM Y.J. ; SIOUTAS C.** Unipolar Charging of Fine and Ultra-Fine Particles Using Carbon Fiber Ionizers. *Aerosol Sci. Technol.,* 2008, vol. 42, 793-800